# EUROPEAN PATENT APPLICATION

(11) **EP 3 182 345 A1**
(43) Date of publication of application: **21.06.2017**
(21) Application number: 16002629.0
(22) Date of filing: 09.12.2016
(51) Int. Cl.: G06Q 10/06, G06Q 10/08

(54) **REDUCING COMPLEXITY OF DETERMINING ROUTES FOR SHIPPING CONTAINERS BY REDUCING PATHS BASED ON USER SELECTION**

(30) Priority: 17.12.2015 US 201514973136
(71) Applicant: SAP SE, 69190 Walldorf (DE)
(72) Inventor: YAO, Leiyi, 69190 Walldorf (DE); CHEN, Xin, 69190 Walldorf (DE)
(74) Representative: Müller-Boré & Partner Patentanwälte PartG mbB

(57) **Abstract**

A non-transitory computer-readable storage medium may comprise instructions stored thereon for determining optimized routes for repositioning empty shipping containers. When executed by at least one processor, the instructions may be configured to cause a computing system to at least generate candidate paths for repositioning empty shipping containers based on container depots, direct paths between the container depots, and scheduled paths between the container depots; present the candidate paths to a user; receive a selection of preferred paths from the user, the preferred paths being a subset of the candidate paths; and generate the optimized routes for repositioning the empty shipping containers between the container depots based on the preferred paths and movements of full shipping containers between the container depots.

## Description

### TECHNICAL FIELD

This description relates to determining routes for shipping containers.

### BACKGROUND

Commercial goods may be placed into shipping containers for transporting to destinations via trucks, trains, or shipping vessels. Transporting the goods via shipping container may allow for faster loading and unloading of the shipping containers, as well as standardization of shipments and handling equipment. The goods may be transmitted via the shipping containers from source container depots to destination container depots by train or shipping vessel, and transmitted from customer locations to container depots and from container depots to other customer locations by truck. The transportation network may be complex, requiring advance planning taking into account schedules, capacities, speed, and cost.

Empty containers may need to be repositioned to fulfill current and future demand for shipping containers due to trade imbalances, in which export-dominant ports face shipping container shortages and import-dominant ports accumulate unnecessary empty shipping containers. The large number of container depots in a transportation network, and the possible paths between container depots, may increase the complexity of determining optimal paths for shipping containers beyond what modem computing systems can solve in a reasonable time period.

### SUMMARY

According to one example, a non-transitory computer-readable storage medium may comprise instructions stored thereon for determining optimized routes for repositioning empty shipping containers. When executed by at least one processor, the instructions may be configured to cause a computing system to at least generate candidate paths for repositioning empty shipping containers based on container depots, direct paths between the container depots, and scheduled paths between the container depots; present the candidate paths to a user; receive a selection of preferred paths from the user, the preferred paths being a subset of the candidate paths; and generate the optimized routes for repositioning the empty shipping containers between the container depots based on the preferred paths and movements of full shipping containers between the container depots.

According to another example, a non-transitory computer-readable storage medium may comprise instructions stored thereon for determining optimized routes for repositioning empty shipping containers. When executed by at least one processor, the instructions may be configured to cause a computing system to at least generate candidate paths for repositioning empty shipping containers based on container depots, paths between container depots, and movements of full shipping containers between the container depots along the paths; present the candidate paths to a user; receive a removal of some of the candidate paths from the user, the removal resulting in remaining paths that are a subset of the candidate paths and not do not include the removed paths; and generate the optimized routes for repositioning the empty shipping containers between the container depots based on the remaining paths and movements of full shipping containers between the container depots.

According to another example, a method performed by a computing system for determining optimized routes for repositioning empty shipping containers may comprise generating, by the computing system, candidate paths for repositioning empty shipping containers based on container depots, direct paths between the container depots, and scheduled paths between the container depots; presenting the candidate paths to a user; receiving a selection of preferred paths from the user, the preferred paths being a subset of the candidate paths; and generating the optimized routes for repositioning the empty shipping containers between the container depots based on the preferred paths and movements of full shipping containers between the container depots.

The details of one or more implementations are set forth in the accompanying drawings and the description below. Other features will be apparent from the description and drawings, and from the claims.

### BRIEF DESCRIPTION OF THE DRAWINGS

FIG. 1A is a diagram showing container depots in a transportation network according to an example implementation.
FIG. 1B is a diagram showing hops between container depots from a source container depot to a destination container depot in the transportation network of FIG. 1A according to an example implementation.
FIG. 1C is a diagram showing candidate paths from the source container depot to the destination container depot in the transportation network of FIGs. 1A and 1B according to an example implementation.
FIG. 1D is a diagram showing preferred paths from the source container depot to the destination container depot selected by a user from the candidate paths of FIG. 1C according to an example implementation.
FIG. 1E is a diagram showing optimized routes from the source container depot to the destination container depot determined by a computing system from the preferred paths of FIG. 1D according to an example implementation.
FIG. 2 shows a computing system configured to present the candidate paths of FIG. 1C, receive the selection of preferred paths of FIG. 1D, and determine the optimized routes of FIG. 1E according to an example implementation.
FIG. 3 shows a supply / demand table according to an example implementation.
FIG. 4 shows a cost table according to an example implementation.
FIG. 5 shows a result table according to an example implementation.
FIG. 6 shows a path table according to an example implementation.
FIG. 7 shows a path detail table according to an example implementation.
FIG. 8 shows a container depot table according to an example implementation.
FIG. 9 shows an output table according to an example implementation.
FIG. 10 shows a route table according to an example implementation.
FIG. 11 shows a supply / demand table according to an example implementation.
FIG. 12 shows an output table according to an example implementation.
FIG. 13A shows paths from the source container depot to the destination container depot according to an example implementation.
FIG. 13B shows virtual nodes within two of the paths shown in FIG. 13A according to an example implementation.
FIG. 14 shows a flowchart of a method performed by the computing system of FIG. 2 according to an example implementation.
FIG. 15 shows a flowchart of a method according to an example implementation.
FIG. 16 shows a flowchart of a method according to another example implementation.

### DETAILED DESCRIPTION

A computing system may reduce the complexity of determining optimal routes for containers by presenting candidate paths to user. The user may reduce the number of candidate paths by either selecting a subset of the candidate paths for determining the optimal routes, or by selecting some of the candidate paths for removal. The user may select or remove paths based on personal preference, business reasons, weather, cost, or other factors. The computing system may thereafter determine the optimal routes, and numbers and types of empty shipping containers to be transported via the optimal routes, based on the smaller set of paths, with reduced computational complexity. The optimized routes and numbers of empty shipping containers may balance, to the extent possible, the empty containers between container depots by balancing supply and demand for empty containers at container depots to reduce the demand or shortage of empty containers at export-dominant ports and to reduce the supply or excess of unnecessary empty containers at import-dominant ports. The optimized routes and numbers of empty shipping containers transported via the optimized routes may, for example, minimize the number of empty containers at container depots that receive a high number of full containers and maximize the number of empty containers at container depots that send a high number of full containers.

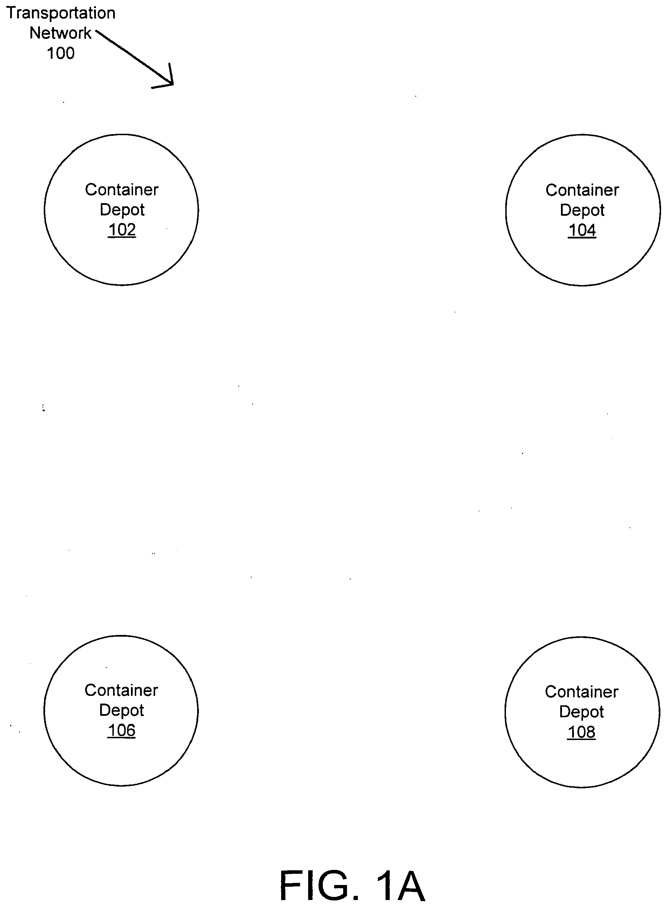

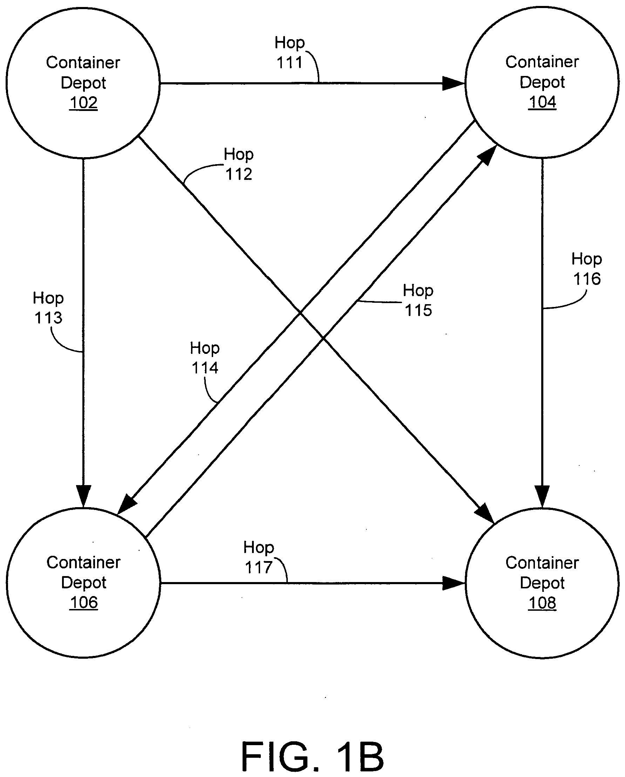

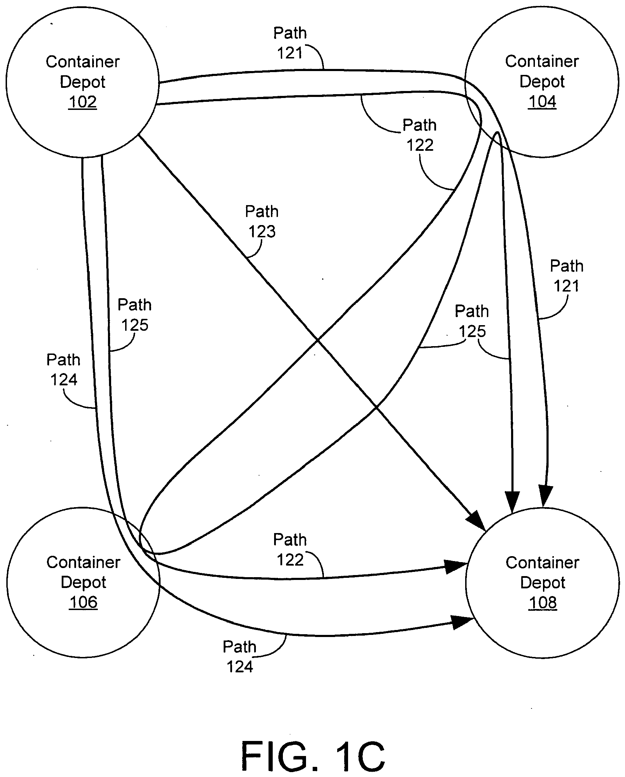

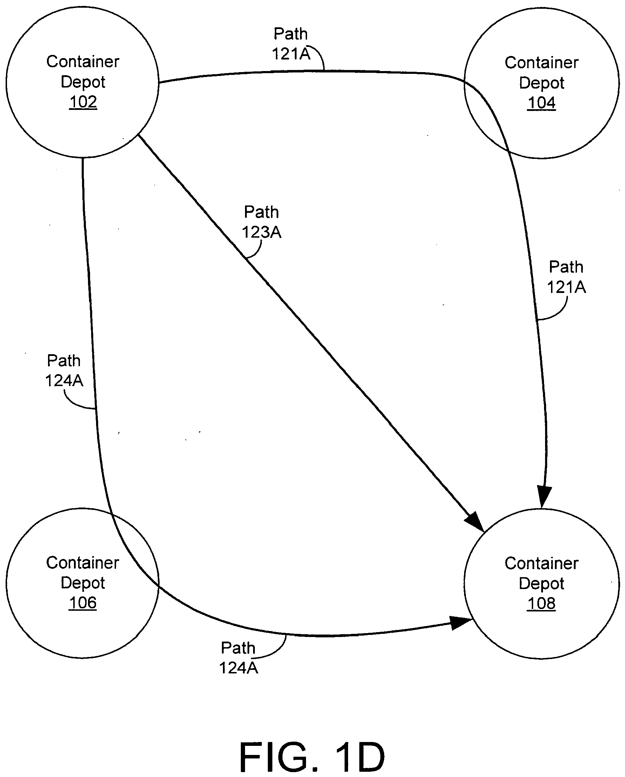

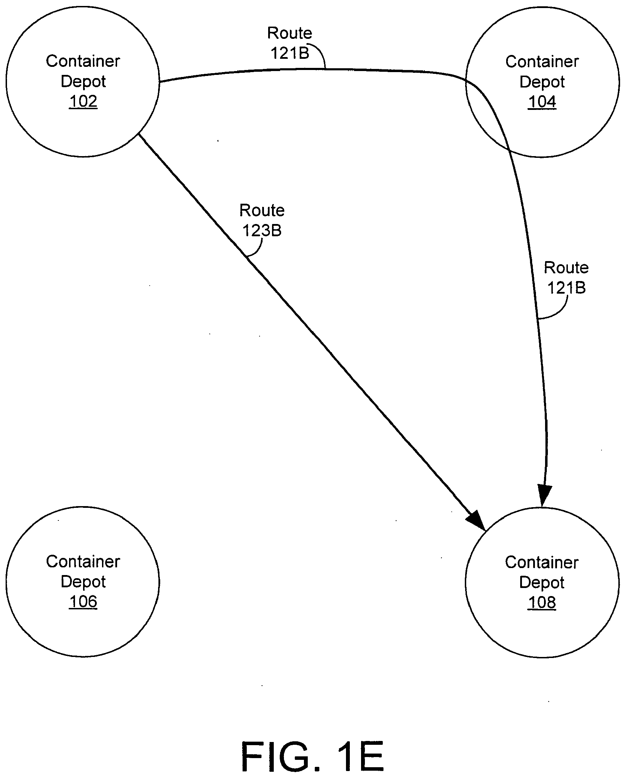

FIG. 1A is a diagram showing container depots 102, 104, 106, 108 in a transportation network 100 according to an example implementation. The container depots 102, 104, 106, 108 may represent locations at which empty shipping containers may be loaded with goods, the loaded or full shipping containers may be sent to other container depots 102, 104, 106, 108, loaded or full shipping containers may be received, and goods may be unloaded or removed from loaded or full shipping containers. Shipping containers may be transported between container depots 102, 104, 106, 108 by scheduled paths that are scheduled independent of customer request, such as train or ship. Goods may be loaded and unloaded onto and from shipping containers at the container depots 102, 104, 106, 108, or the goods may be loaded onto and from the shipping containers at customer locations remote from the container depots 102, 104, 106, 108, and the loaded or full shipping containers may be transported to and from the container depots 102, 104, 106, 108 by direct paths scheduled by customers such as by truck. While four container depots 102, 104, 106, 108 are shown in FIG. 1A for illustrative purposes of showing the paths and routes (shown and described with respect to FIGs. 1B, 1C, 1D, and 1E), many more than four container depots may be included in the transportation network 100.

FIG. 1B is a diagram showing hops 111, 112, 113, 114, 115, 116, 117, between container depots 102, 104, 106, 108 from a source container depot 102 to a destination container depot 108 in the transportation network 100 of FIG. 1A according to an example implementation. In this example, the hops 111, 112, 113, 114, 115, 116, 117 include one-to-to transits between container depots 102, 104, 106, 108 that lead from the source container depot 102 to the destination container depot 108, but not hops that lead from the destination container depot 108 to the source container depot 102.

FIG. 1C is a diagram showing candidate paths 121, 122, 123, 124, 125 from the source container depot 102 to the destination container depot 108 in the transportation network 100 of FIGs. 1A and 1B according to an example implementation. Paths may be transits from a source container depot 102, 104, 106, 108 to a destination container depot 102, 104, 106, 108, and may include one or multiple hops. A path may, for example, include a sequence of container depots 102, 104, 106, 108. In this example, the candidate paths 121, 122, 123, 124, 125 include all possible paths between the container depots 102, 104, 106, 108 leading from the source container depot 102 to the destination container depot 108 that do not revisit a container depot 102, 104, 106, 108 that has already been visited along the path. The candidate paths 121, 122, 123, 124, 125 may each include one or multiple hops. For example, candidate path 121 includes hop 111 (labeled in FIG. 1B) and hop 116 (labeled in FIG. 1B).

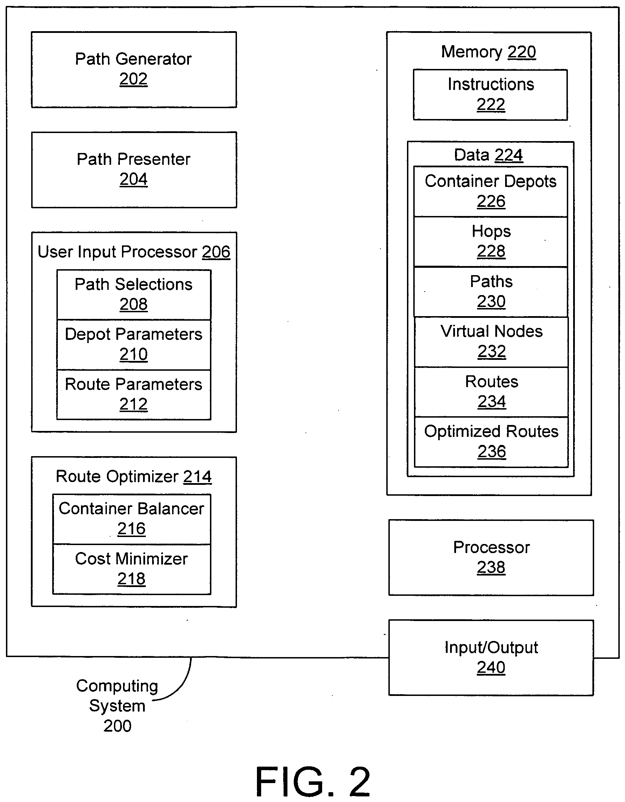

The computing system (shown in FIG. 2) may present all of the candidate paths 121, 122, 123, 124, 125 to the user. In an example implementation, the user may select, from the candidate paths 121, 122, 123, 124, 125, preferred paths (shown in FIG. 1D), which are a subset of the candidate paths 121, 122, 123, 124, 125, for the optimization to be performed upon to determine optimal routes for the shipping containers. In another example implementation, the user may select some, but less than all of, the candidate paths 121, 122, 123, 124, 125 for removal, with the remaining candidate paths being the set of preferred paths.

FIG. 1D is a diagram showing preferred paths 121 A, 123A, 124A from the source container depot 102 to the destination container depot 108 selected by a user from the candidate paths 121, 122, 123, 124, 125 of FIG. 1C according to an example implementation. Preferred path 121A may result from the user's selection, or non-removal, of candidate path 121, preferred path 123A may result from the user's selection, or non-removal, of candidate path 123, and preferred path 124A may result from the user's selection, or non-removal, of candidate path 124. In an example in which the user removes paths from the candidate paths, the preferred paths may be the remaining paths. In this example, the user selected, or did not remove, candidate paths 121, 123, and 124, and did not select, or removed, candidate paths 122 and 125.

The computing system may determine optimal routes for the shipping containers, including repositioning empty shipping containers, based on the preferred paths 121A, 123A, 124A, and may not consider the candidate paths 121, 122, 123, 124, 125 that were not included in the preferred paths 121A, 123A, 124A. Preferred paths may be used to transport full shipping containers, with empty shipping containers allowed to be shipped via any candidate paths, or both full and empty shipping containers may be limited to transit via only the preferred paths, according to example implementations. A route may include a path, which includes a sequence of container depots, with numbers and types of full and/or empty shipping containers transported via the path, as well as scheduling information, such as times of arrival and/or departure of the numbers of full and empty shipping containers at the source container depot 102, the destination container depot 108, and/or any intermediary container depots 104, 106. The computing system may determine and/or generate the optimal routes, and numbers and types of empty shipping containers to transport via the optimal routes, based on parameters such as, for example, the preferred paths 121 A, 123 A, 124A, movements of full shipping containers between the container depots 102, 104, 106, 108, a minimum number of shipping containers for at least one of the container depots 102, 104, 106, 108, and/or a minimum number of containers for a flow along at least one of the preferred paths 121A, 123A, 124A. Any of all of these parameters may be based on input from the user. Determining optimal routes for the shipping containers based on the preferred paths 121A, 123A, 124A, and not considering the candidate paths 121, 122, 123, 124, 125 that were not included in the preferred paths 121A, 123A, 124A, may reduce the computational complexity of the optimal route determination to a level that the computing system can perform in a reasonable time period.

FIG. 1E is a diagram showing optimized routes from the source container depot 102 to the destination container depot 108 determined by the computing system from the preferred paths 121A, 123A, 124A of FIG. 1D according to an example implementation. In this example, the computing system determined that the optimal routes were optimal route 121 B from the source container depot 102 to the container depot 104 and then the destination container depot 108, corresponding to preferred path 121A, and optimal route 123B directly from the source container depot 102 to the container depot 108, but that the preferred path 124A was not an optimal route. The computing system may also have determined numbers and types of empty shipping containers to transport via the optimal routes 121B, 123B.

FIG. 2 shows a computing system 200 configured to present the candidate paths 121, 122, 123, 124, 125 of FIG. 1C, receive the selection of preferred paths 121A, 123A, 124A of FIG 1D, and determine the optimized routes 121B, 123B of FIG. 1E according to an example implementation. The computing system 200 may include a system configured to store data and execute instructions, such as one or more servers, desktop computers, laptop or notebook computers, and/or smartphones. The computing system 200 may reduce the number of candidate paths 121, 122, 123, 124, 125 based on input from the user to reduce the complexity of generating and/or determining the optimized routes 121B, 123B.

The computing system 200 may include a path generator 202. The path generator 202 may generate paths, such as the candidate paths 121, 122, 123, 124, 125 shown and described with respect to FIG. 1C, based on container depots, direct paths between the container depots, and/or scheduled paths between the container depots. The direct paths between the container depots may include unscheduled paths and/or paths that may be scheduled by a customer, such as freight trucks transporting shipping containers on demand by customers. The scheduled paths may include paths scheduled independently of customer demand, such as ships and/or trains. The path generator 202 may generate all possible paths from a source container depot to a destination container depot.

The computing system 200 may include a path presenter 204. The path presenter 204 may present the candidate paths, such as the candidate paths 121, 122, 123, 124, 125 shown and described with reference to FIG. 1C, generated by the path generator 202, to the user. The path presenter 204 may present the candidate paths to the user within a graphical user interface (GUI), within which the user may select and/or remove a subset of the candidate paths, which results in the set of preferred paths.

The computing system 200 may include a user input processor 206. The user input processor 206 may process input received from the user. The input received from the user may reduce the complexity of determining optimal routes, by reducing the number of paths to consider, and may include parameters used to determine the optimal routes.

The user input processor 206 may process path selections 208. The path selections 208 may include selections or removals of candidate paths to arrive at the preferred paths. The preferred paths, which are a subset of the candidate paths and do not include all of the candidate paths, may reduce the computational complexity of determining the optimal paths by reducing the number of paths to consider in determining the optimal paths.

The input processor 206 may process depot parameters 210 inputted by the user. The depot parameters 210 may include a minimum number, or safe number (which may be greater than zero), of shipping containers for each container depot, and/or a maximum number of shipping containers for each container depot. The minimum and maximum number shipping containers for each container depot may be parameters and/or constraints which the computing system 200 must satisfy when determining optimal routes for moving and/or repositioning empty shipping containers.

The user input processed by the user input processor 206 may include route parameters 212. The route parameters 212 may include minimum and/or maximum numbers of containers within a flow. Full and empty shipping containers may count toward the minimum and/or maximum numbers of the containers within the flow, or the minimum and/or maximum may include only full shipping containers, according to example implementations. A flow may be a group of containers that travels together, leaving and arriving from and to container depots, at a same time, along a hop, path, and/or route. The minimum may set a minimum number of containers that may be included in a flow for cost reasons, such as because transporting fewer than the minimum number of shipping containers may be cost prohibitive. The maximum may set a maximum number of containers that may be included in a flow due to physical constraints, such as size, of a vessel. The minimum and maximum numbers may be individually set for each flow based on user input, and/or may be set based on a type of vessel for the flow, and may be based on user input.

The route parameters 212 may also include path modifications based on user input. The path modifications may specify which container depots are in a path based on user input, a sequence of container depots based on user input, a schedule and/or time to arrive and/or leave from a container depot within a path and/or route based on user input, and/or costs of hops, paths, routes, and/or flows which may be specified based on user input.

The computing system 200 may include a route optimizer 214. The route optimizer 214 may determine optimal routes for transporting shipping containers, including repositioning empty shipping containers, and/or numbers and types of empty shipping containers to transport via the optimal routes. The route optimizer 214 may determine the optimal routes and/or number of empty shipping containers based on the preferred paths and/or path selections 208, the depot parameters 210, and/or the route parameters 212. The route optimizer 214 may prefer scheduled paths over direct paths due to the lower cost of scheduled paths, according to an example implementation.

The route optimizer 214 may include a container balancer 216. The container balancer 216 may optimize the routes, and numbers of empty shipping containers to transport via the optimized routes, to balance a supply and demand of empty containers at the container depots. In an example implementation, each container depot may have a supply / demand value, where a positive value denotes an excess or supply of empty shipping containers at the container depot and a negative value denotes a shortage or demand of empty shipping containers at the container depot. The container balancer 216 may optimize the routes by bringing a sum of absolute values of the supply / demand values for the container depots as close to zero as possible, by bringing a sum of squares of the supply / demand values for the container depots as close to zero as possible, or by other methods to bring the supply / demand values for the container depots as close to zero as possible.

According to an example implementation, the container balancer 216 may select or prefer routes and numbers of empty shipping containers transported via the routes that bring, for each container depot and/or a sum of the container depots, a number of empty shipping containers brought to the container depot as close as possible to a number of full shipping containers sent from the container depot minus a number of full shipping containers brought to the container depot. According to an example implementation, the container balancer 216 may select or prefer routes and numbers of empty shipping containers that bring, for each container depot and/or a sum of the container depots, a number of empty shipping containers sent from the container depot as close as possible to a number of full shipping containers brought to the container depot minus a number of full shipping containers sent from the container depot. According to an example implementation, the container balancer 216 may select or prefer routes and numbers of shipping containers that bring, for each container depot and/or a sum of the container depots, a number of full shipping containers brought to the container depot as close as possible to a number of full shipping containers sent from the container depot.

The route optimizer 214 may include a cost minimizer 218. The cost minimizer may optimize the routes and/or numbers of empty shipping containers to transport via the routes to minimize a total cost of the routes. The total cost may be a sum of the costs of hops, paths, routes, and/or flows specified based on user input.

The route optimizer 214 may determine optimal routes and/or numbers of empty shipping containers to transport via the optimal routes within the constraints of the path selections 208, depot parameters 210, and route parameters 212, to balance the shipping containers as described above with respect to the container balancer 216 and to minimize the cost as described above with respect to the cost minimizer 218. The route optimizer 214 may, for example, select a set of routes that minimizes a weighted sum of the imbalance of empty shipping containers (as determined by the container balancer 216) and the total cost of the routes (as determined by the cost minimizer 218).

The computing system 200 may include memory 220. The memory 220 may include at least one non-transitory computer-readable storage medium, which may include at least one memory device. The memory 220 may store instruction 222. The instructions 222, when executed by at least one processor, such as the processor 238 described below, may cause the computing system 200 to perform any combinations of the methods, functions, or techniques described herein.

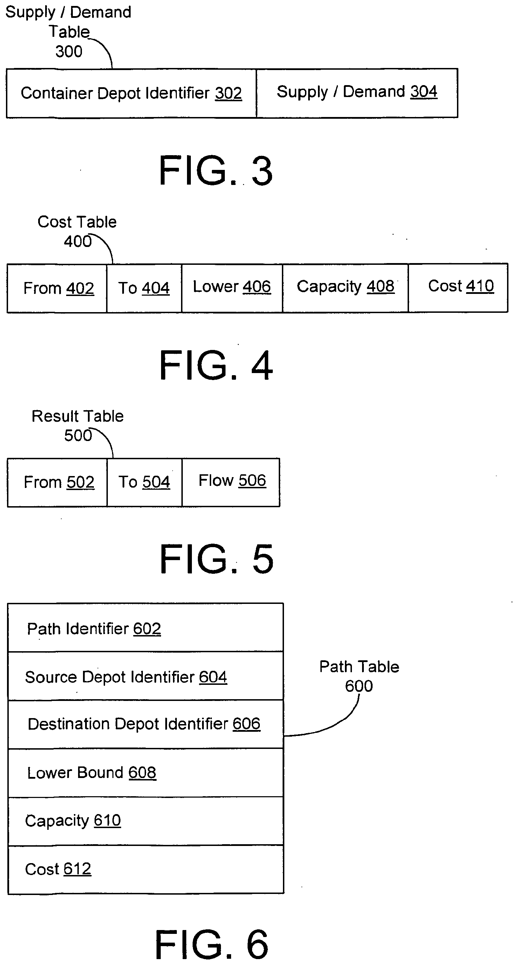

The memory 220 may also store data 224. The data 224 may include information used to perform any of the methods, functions, or techniques described herein, and/or generated as a result of any of the methods, functions, or techniques described herein. The data 224 may include, for example, any combination of some or all of the tables shown and described with respect to FIGs. 3 through 12.

The data 224 may include information regarding the container depots 226, such as the container depots 102, 104, 106, 108 described above. The container depot 226 information may include identities of the container depots, locations of the container depots with respect to other container depots, customer locations, and shipping lines, minimum or safe numbers of shipping containers at each container depot, times to load and unload shipping containers at each container depot, costs to load and unload shipping containers at each container depot, and/or costs to store shipping containers at each container depot.

The data 224 may include information regarding the hops 228, such as the hops 111, 112, 113, 114, 115, 116, 117 described above. The hops 228 may include, for example, the container depots at each end of the hop, the distance between the container depots along each hop, the cost to travel for each hop, types of transit for each hop such as direct or scheduled, times to travel between each hop, and/or minimum and maximum numbers of shipping containers for flows between each hop. A flow may be a group of shipping containers moving together between container depots.

The data 224 may include information regarding the paths 230, including both candidate paths such as the candidate paths 121, 122, 123, 124, 125 shown and described with respect to FIG. 1C and preferred paths such as the preferred paths 121 A, 123A, 124A shown and described with respect to FIG. 1D. The paths 230 may include source container depots and destination container depots, hops and/or intermediary container depots, and/or a sequence of the hops and/or intermediary container depots.

The data 224 may include virtual nodes 232. The virtual nodes 232 may be imaginary container depots between source and destination container depots that enable a network simplex algorithm to be performed on multiple paths between the same source container depot and destination container depot. The virtual container depots may be imaginary intermediary container depots between a source container depot and a destination container depot to avoid multiple connections or flows between the source container depot and the destination container depot.

The data 224 may include routes 234. Routes 234 may include paths with additional information such as numbers of full and empty shipping containers transported via the routes and schedules or times at which shipping containers will be transported, and costs. The routes 234 may include, for example, source container depots and destination container depots, hops and/or intermediary container depots, a sequence of the hops and/or intermediary container depots, a time or schedule from the source depot to the destination depot and at any intermediary container depots, and/or a cost of transporting shipping containers via the route.

The data 224 may include optimized routes 236. The optimized routes 236 may be a subset of the routes 234. The optimized routes 236 may be determined and/or generated by the route optimizer 214.

The computing system 200 may include at least one processor 238. The at least one processor 238 may execute instructions, such as instructions stored in memory 220, to cause the computing system 200 to perform any combination of the methods, functions, and/or techniques described herein.

The computing system 200 may also include an input/output module 240. The input/output module 240 may include one or more input interfaces and one or more output interfaces. The input interfaces and output interfaces may include wired or wireless nodes for communicating with other computing systems. The input interface(s) may also include a keyboard, mouse, touchscreen, and/or microphone, as non-limiting examples. The output interface(s) may include a display and/or speaker, as non-limiting examples. The computing system 200 may receive input and provide output to a user directly at the computing system 200, such as via a keyboard, mouse, and display, or may receive input and output remotely, such as via a remote computing device that communicates with the computing system 200 via a network such as the Internet.

FIG. 3 shows a supply / demand table 300 according to an example implementation. The computing system 200 may receive the information included in the supply / demand table 300 based on user input. The supply / demand table 300 may include a container depot identifier 302 identifying a container depot, and a supply / demand value 304 denoting whether the identified container depot has a supply or excess of empty shipping containers, or a demand or shortage of shipping containers that are needed to store goods to be transported. The memory 220 may store one supply / demand table 300 for each container depot, and may store the supply / demand tables 300 in the container depots 226 portion of the data 224 in the memory 220.

FIG. 4 shows a cost table 400 according to an example implementation. The cost table 400 may be associated with arcs or hops, such as the hops 111, 112, 113, 114, 115 shown and described with respect to FIG. 1B, between container depots. The cost table 400 may be included in the hops 228 portion of the data 224, or in the routes 234 portion of the data 224. The cost table 400 may include a from field 402 identifying a source container depot, a to field 404 identifying a destination container depot, a lower field 406 identifying a lower or minimum number of shipping containers that may be included in a flow on the hop or arc, a capacity field 408 identifying a maximum capacity of shipping containers that may be included in a flow on the hop or arc, and a cost field 410 identifying a cost for transporting shipping containers along the hop or arc, which may be per shipping containers or per flow. The values of the lower field 406, capacity field 408, and/or cost field 410 may be based on user input.

FIG. 5 shows a result table 500 according to an example implementation. The result table 500 may be stored in the hops 228 portion of the data 224, the routes 234 portion of the data 224, or the optimized routes 236 portion of the data 224. The result table 500 may be generated by the route optimizer 214. The result table 500 may include a from field 502 identifying a source container depot and a to field 504 identifying a destination container depot. The result table 500 may also include a flow field 506 indicating a number of shipping containers to transport along a flow between the source container depot identified in the from field 502 and the destination container depot identified in the to field 504.

FIG. 6 shows a path table 600 according to an example implementation. Information stored in the path table 600 may be generated by the computing system 200 based on the paths and information stored in the cost table 400. The path table 600 may be stored in the paths 230 portion of the data 224. The path table 600 may include a path identifier 602 uniquely identifying a path, such as a candidate path 121, 122, 123, 124, 125 shown and described with respect to FIG. 1C, or a preferred path 121 A, 123A, 124A shown and described with respect to FIG. 1D. The path table 600 may include a source depot identifier 604 identifying, such as by a unique identifier, an initial or source container depot in the path, and a destination depot identifier 606 identifying, such as by a unique identifier, a final or destination container depot in the path. A path may be a connection between source node and a destination node based on a sequence of stops at container depots. Multiple paths may exist between a source of shipping containers and a destination container depot. The path table 600 may include a lower bound 608 indicating a lower bound or minimum number of shipping containers to be included in a flow along the path, a capacity 610 indicating an upper bound or maximum number of shipping containers to be included in a flow along the path, and a cost 612 value indicating a cost of transporting shipping containers along the path. The cost 612 may be per shipping container or per flow.

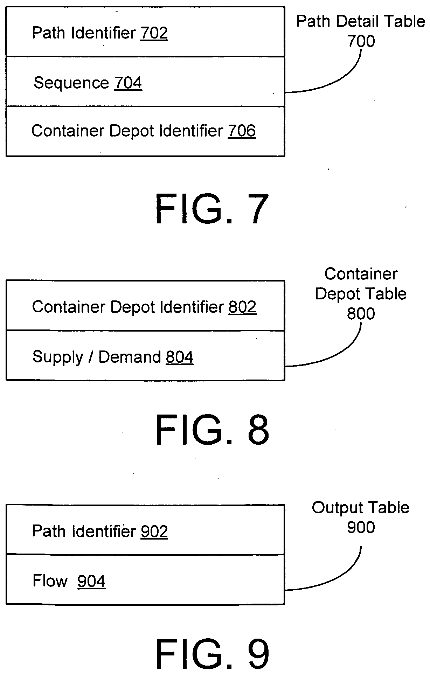

FIG. 7 shows a path detail table 700 according to an example implementation. The path detail table 700 may be included in the paths portion 230 of the data 224. The route optimizer 214 may use the path detail table 700 to query intermediary stops along a path identified by the path table 600. The path detail table 700 may include a path identifier 702 identifying the path, a sequence field 704 indicating an order of the container depots along the path, and a container depot identifier 706 identifying the container depot that is the subject of the path detail table 700.

FIG. 8 shows a container depot table 800 according to an example implementation. The container depot table 800 may be stored in the container depots 226 section of the data 224. The container depot 226 may include a container depot table 800 for each container depot in the transportation system. The container depot table 800 may include a container depot identifier 802 identifying a container depot. The container depot table 800 may include a supply / demand value 804 indicating whether the container depot has a supply or excess of empty shipping containers or a demand or shortage of empty shipping containers to meet the need to transport goods.

FIG. 9 shows an output table 900 according to an example implementation. The route optimizer 214 may generate output tables 900 for each path based on the preferred paths, the goods to be shipped, and the needs to balance supply and demand of shipping containers and to minimize cost. The route optimizer 214 may generate an output table for each preferred path. Each output table 900 may include a path identifier 902 identifying one of the paths, and a flow value 904 indicating a number of shipping containers, which may be broken into full or loaded shipping containers and empty shipping containers, to be transported along the identified path.

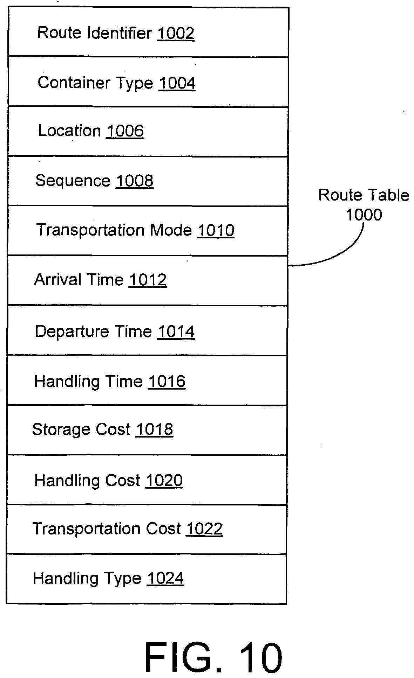

FIG. 10 shows a route table 1000 according to an example implementation. The route optimizer 214 may generate route tables 1000, and store the route tables 1000 in the routes 234 and/or optimized routes 236. Routes may be sequences of locations or container depots, or paths, with schedules.

The route table 1000 may include a route identifier 1002 identifying a route by a unique identifier. The route table 1000 may be stored in the routes 234 portion of the data 224, and values in the route table 1000 may be modified by the user.

The route table 1000 may include a container type 1004 field indicating types of shipping containers allowed in the identified route. The route table 1000 may include a location 1006 field indicating locations, such as container depots, included in the route. The route table 1000 may include a sequence 1008 field indicating a sequence of the locations. The route table 1000 may include a transportation mode 1010 field indicating a mode of transportation, such as ship, train, or truck, for the route. The route table 1000 may include an arrival time 1012 field indicating a time at which the shipping container(s) will arrive at one or more of the locations (such as container depots) in the route. The route table 1000 may include a departure time 1014 field indicating a time at which the shipping container(s) will depart from one or more of the locations (such as container depots) in the route. The route table 1000 may include a handling time 1016 field indicating a time required to load, unload, and/or transship the shipping container(s), and/or goods stored in the shipping container(s), at one or more of the locations in the route. The route table 1000 may include a storage cost 1018 field indicating a cost for storing shipping containers at one or more locations in the route. The route table 1000 may include a handling cost 1020 field indicating a cost to load shipping containers at one or more locations in the route, unload shipping containers at one or more locations in the route, and/or load or unload goods into or out of shipping containers at one or more locations in the route. The route table 1000 may include a transportation cost 1022 field indicating a cost of transporting shipping containers between container depots along the route, and/or a handling type 1024 field indicating how shipping containers may be loaded, unloaded, and/or transshipped to and from container depots along the route.

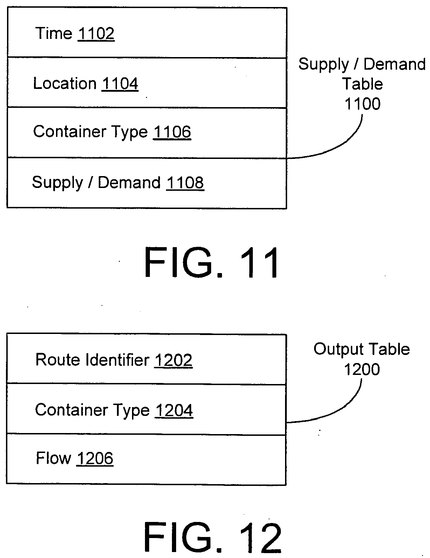

FIG. 11 shows a supply / demand table 1100 according to an example implementation. The route optimizer 214 may generate the supply / demand table 1100 in determining optimal routes for empty shipping containers. The route optimizer may generate multiple supply / demand tables 1100 for each container depot, each supply / demand table 1100 corresponding to a different snapshot in time. The supply / demand table 1100 may include a time 1102 field indicating a time that the supply / demand table 1100 corresponds to, a location 1104 field identifying a container depot the corresponds to the supply / demand table 1100, a container type 1106 field indicating types of shipping containers at the container depot, and a supply / demand 1108 field indicating a supply or excess of shipping containers or a demand or shortage of empty shipping containers at the identified container depot.

FIG. 12 shows an output table 1200 according to an example implementation. Output tables 1200 may be generated by the route optimizer 214, may correspond to the optimal routes 121B, 123B shown and described with respect to FIG. 1E, and may be stored in the optimized routes 236 portion of the data 224. Each output table 1200 may include a route identifier 1202 identifying the route, a container type 1204 field indicating types of shipping containers being transported along the identified route, and a flow 1206 field indicating numbers of each shipping container type, and which may be broken down into full shipping containers and empty shipping containers, transported along the identified route.

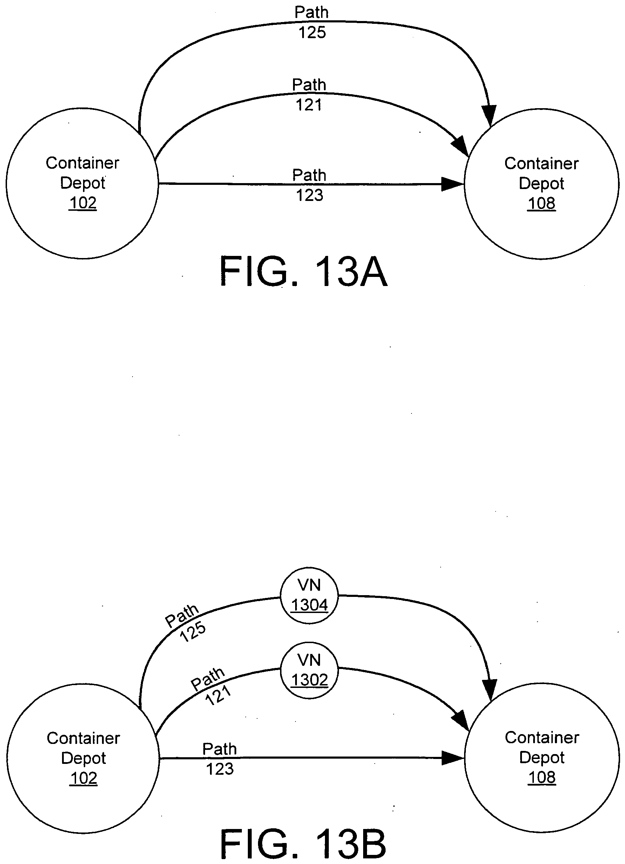

FIG. 13A shows paths 121, 123, 1256 from the source container depot 102 to the destination container depot 108 according to an example implementation. Multiple paths 121, 123, 125 along different sequences of container depots may exist between the source container depot 102 and the destination container depot 108. Some algorithms, such as network simplex, may not support multiple arcs or paths between nodes. To perform such algorithms, virtual nodes or virtual container depots may be added to paths beyond a first path 123.

FIG. 13B shows virtual nodes 1302, 1304 within two of the paths 121, 125 shown in FIG. 13A according to an example implementation. The virtual nodes 1302, 1304 may avoid multiple connections or paths between the source container depot 102 and the destination container depot 108. The route optimizer 214 may perform an optimization algorithm, such as network simplex, to determine optimal routes for transporting empty and full shipping containers between the source container depot 102 and the destination container depot 108 using the added or generated virtual nodes 1302, 1304.

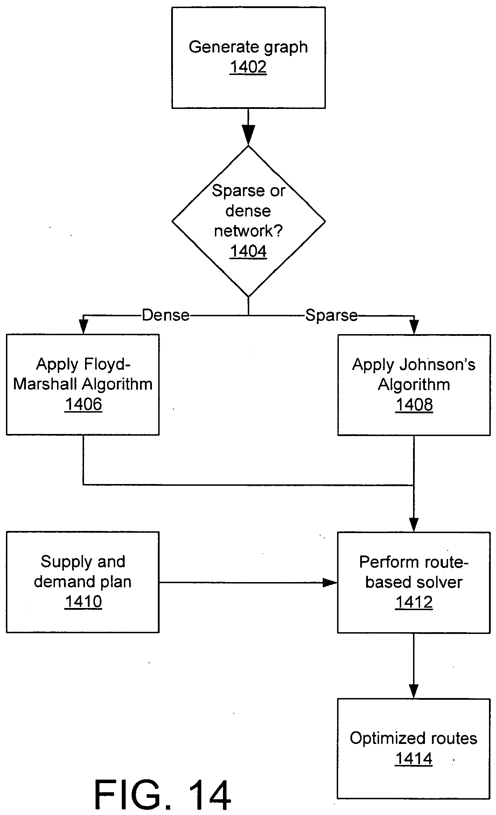

FIG. 14 shows a flowchart of a method performed by the computing system 200 of FIG. 2 according to an example implementation. The method may include generating a graph 1402. The graph may include paths and/or routes, such as the paths included in path tables 600 and/or the routes included in the route tables 1000 shown and described with respect to FIG. 10. The user may select or modify paths used to determine or generate the routes, and/or may select or modify the routes generated by the computing system 200.

The method may include determining whether a network, which may include the container depots and the routes, is sparse or dense (1404). The computing system may determine that the network is dense if a number of routes is greater than a square of a number of container depots, and sparse if the number of routes is less than or equal to the square of the number of container depots.

If the network is dense, then the route optimizer 214 may apply the Floyd-Marshall Algorithm (1406) on the paths and/or routes. If the network is sparse, then the route optimizer 214 may apply Johnson's Algorithm (1408) on the paths and/or routes.

The user may provide input regarding the shipping containers via a supply and demand plan (1410). The supply and demand plan may include, for example, values shown in the supply / demand table 300 shown and described with respect to FIG. 3, the cost table 400 shown and described with respect to FIG. 4, and/or the result table 500 shown and described with respect to FIG. 5.

Based on the supply and demand plan 1410 and the result of either the Floyd-Marshall Algorithm or Johnson's Algorithm, the route optimizer 214 may perform a route-based solver (1412) to determine, generate, and/or output optimized routes (1414) for transporting empty shipping containers, including numbers of empty shipping containers to be transported via each optimized route.

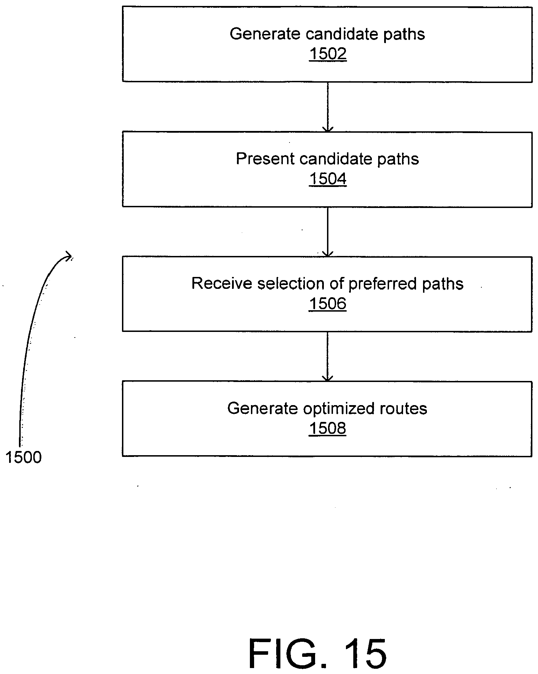

FIG. 15 shows a flowchart of a method 1500 according to an example implementation. According to this example, the method 1500 may include generating candidate paths for repositioning empty shipping containers (1502). The candidate paths may be generated based on container depots, direct paths between the container depots, and scheduled paths between the container depots. The method 1500 may also include presenting the candidate paths to a user (1504). The method 1500 may also include receiving a selection of preferred paths from the user (1506). The preferred paths may be a subset of the candidate paths. The method 1500 may also include generating the optimized routes for repositioning the empty shipping containers between the container depots (1508). The optimized routes may be generated based on the preferred paths and movements of full shipping containers between the container depots.

According to an example implementation, the method may further include determining optimal quantities of empty shipping containers to reposition via the optimized routes.

According to an example implementation, the method may further include determining optimal quantities and types of empty shipping containers to reposition via the optimized routes.

According to an example implementation, the method may further include receiving a minimum number of containers for at least one of the container depots. In this example, the generating the optimized routes may include generating the optimized routes for repositioning the empty shipping containers between the container depots based on the preferred paths, the movements of full shipping containers between the container depots, and the minimum number of containers for the at least one container depot.

According to an example implementation, the method may further include receiving a minimum number of containers for at least one of the preferred paths. In this example, the generating the optimized routes may include generating the optimized routes for repositioning the empty shipping containers between the container depots based on the preferred paths, the movements of full shipping containers between the container depots, and the minimum number of containers for the at least one preferred path.

According to an example implementation, the method may further include receiving, from the user, a modification of at least one of the candidate paths, the modification changing at least one container depot within a path of multiple container depots, the preferred paths including the modified at least one candidate path.

According to an example implementation, the method may further include receiving, from the user, a modification of at least one of the candidate paths, the modification changing a sequence of at least two container depots within a path of multiple container depots, the preferred paths including the modified at least one candidate path.

According to an example implementation, the method may further include receiving, from the user, a change to a schedule of at least one optimized route, the change to the schedule changing a time at which goods leave at least one container depot within a path of multiple container depots on the at least one optimized route.

According to an example implementation, the method may further include receiving, from the user, a cost of at least one path between container depots. In this example, the generating the optimized routes may include generating the optimized routes for repositioning the empty shipping containers between the container depots based on the preferred paths, the movements of full shipping containers between the container depots, and the cost of the at least one path between container depots.

According to an example implementation, the generating the optimized routes (1580) may include generating routes for the empty shipping containers that bring, for each container depot, a number of empty shipping containers brought to the container depot as close as possible to a number of full shipping containers sent from the container depot minus a number of full shipping containers brought to the container depot.

According to an example implementation, the generating the optimized routes (1580) may include generating routes for the empty shipping containers that bring, for each container depot, a number of empty shipping containers sent from the container depot as close as possible to a number of full shipping containers brought to the container depot minus a number of full shipping containers sent from the container depot.

According to an example implementation, the generating the optimized routes (1580) may include generating routes for full shipping containers that bring, for each container depot, a number of full shipping containers brought to the container depot as close as possible to a number of full shipping containers sent from the container depot.

According to an example implementation, the generating the optimized routes (1580) may include generating virtual nodes to represent different paths to a same container depot and applying a network simplex algorithm based on the preferred paths with virtual nodes and movements of full shipping containers between the container depots.

According to an example implementation, the direct paths may be scheduled based on request of a customer and the scheduled paths may be scheduled independent of customer request.

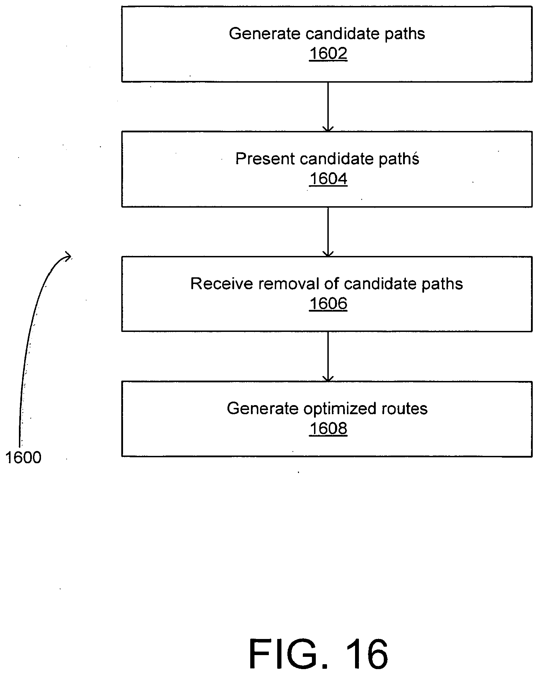

FIG. 16 shows a flowchart of a method 1600 according to another example implementation. According to this example, the method 1600 may include generate candidate paths for repositioning empty shipping containers (1602). The candidate paths may be generated based on container depots, paths between container depots, and movements of full shipping containers between the container depots along the paths. The method 1600 may also include presenting the candidate paths to a user (1604). The method 1600 may also include receiving a removal of some of the candidate paths from the user (1606). The removal may result in remaining paths that are a subset of the candidate paths and not do not include the removed paths. The method 1600 may also include generating the optimized routes for repositioning the empty shipping containers between the container depots (1608). The optimized routes may be generated based on the remaining paths and movements of full shipping containers between the container depots.

According to an example implementation, the method 1600 may further include determining optimal quantities of empty shipping containers to reposition via the optimized routes.

According to an example implementation, the method 1600 may further include determining optimal quantities and types of empty shipping containers to reposition via the optimized routes.

According to an example implementation, the method 1600 may further include receiving a minimum number of containers for at least one of the container depots. In this example, the generating the optimized routes (1608) may include generating the optimized routes for repositioning the empty shipping containers between the container depots based on the remaining paths, the movements of full shipping containers between the container depots, and the minimum number of containers for the at least one container depot.

According to an example implementation, the method 1600 may further include receiving a minimum number of containers for at least one of the remaining paths. In this example, the generating the optimized routes may include generating the optimized routes for repositioning the empty shipping containers between the container depots based on the remaining paths, the movements of full shipping containers between the container depots, and the minimum number of containers for the at least one preferred path.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments of the invention.

## Claims

1. A non-transitory computer-readable storage medium comprising instructions stored thereon for determining optimized routes for repositioning empty shipping containers that, when executed by at least one processor, are configured to cause a computing system to at least:
generate candidate paths for repositioning empty shipping containers based on:
container depots,
direct paths between the container depots, and
scheduled paths between the container depots;
present the candidate paths to a user;
receive a selection of preferred paths from the user, the preferred paths being a subset of the candidate paths; and
generate the optimized routes for repositioning the empty shipping containers between the container depots based on the preferred paths and movements of full shipping containers between the container depots.

2. The non-transitory computer-readable storage medium of claim 1,
wherein the instructions are further configured to cause the computing system to determine optimal quantities of empty shipping containers to reposition via the optimized routes;
or wherein
the instructions are further configured to cause the computing system to determine optimal quantities and types of empty shipping containers to reposition via the optimized routes.

3. The non-transitory computer-readable storage medium of claim 1, wherein:
the instructions are further configured to cause the computing system to receive a minimum number of containers for at least one of the container depots; and
the generating the optimized routes includes generating the optimized routes for repositioning the empty shipping containers between the container depots based on:
the preferred paths,
the movements of full shipping containers between the container depots, and
the minimum number of containers for the at least one container depot,
or wherein:
the instructions are further configured to cause the computing system to receive a minimum number of containers for at least one of the preferred paths; and
the generating the optimized routes includes generating the optimized routes for repositioning the empty shipping containers between the container depots based on:
the preferred paths,
the movements of full shipping containers between the container depots, and
the minimum number of containers for the at least one preferred path.

4. The non-transitory computer-readable storage medium of any one of the preceding claims, wherein:
the instructions are further configured to cause the computing system to receive, from the user, a modification of at least one of the candidate paths, the modification changing at least one container depot within a path of multiple container depots, the preferred paths including the modified at least one candidate path,
or wherein:
the instructions are further configured to cause the computing system to receive, from the user, a modification of at least one of the candidate paths, the modification changing a sequence of at least two container depots within a path of multiple container depots, the preferred paths including the modified at least one candidate path,
or wherein:
the instructions are further configured to cause the computing system to receive, from the user, a change to a schedule of at least one optimized route, the change to the schedule changing a time at which goods leave at least one container depot within a path of multiple container depots on the at least one optimized route.

5. The non-transitory computer-readable storage medium of any one of claims 1 to 3, wherein:
the instructions are further configured to cause the computing system to receive, from the user, a cost of at least one path between container depots; and
the generating the optimized routes includes generating the optimized routes for repositioning the empty shipping containers between the container depots based on:
the preferred paths,
the movements of full shipping containers between the container depots, and
the cost of the at least one path between container depots.

6. The non-transitory computer-readable storage medium of any one of the preceding claims, wherein the generating the optimized routes includes generating routes for the empty shipping containers that bring, for each container depot, a number of empty shipping containers brought to the container depot as close as possible to a number of full shipping containers sent from the container depot minus a number of full shipping containers brought to the container depot, or
wherein the generating the optimized routes includes generating routes for the empty shipping containers that bring, for each container depot, a number of empty shipping containers sent from the container depot as close as possible to a number of full shipping containers brought to the container depot minus a number of full shipping containers sent from the container depot.

7. The non-transitory computer-readable storage medium of any one of the preceding claims, wherein the generating the optimized routes includes generating routes for full shipping containers that bring, for each container depot, a number of full shipping containers brought to the container depot as close as possible to a number of full shipping containers sent from the container depot.

8. The non-transitory computer-readable storage medium of medium of any one of the preceding claims, wherein the generating the optimized routes includes generating virtual nodes to represent different paths to a same container depot and applying a network simplex algorithm based on the preferred paths with virtual nodes and movements of full shipping containers between the container depots.

9. The non-transitory computer-readable storage medium of medium of any one of the preceding claims, wherein the direct paths are scheduled based on request of a customer and the scheduled paths are scheduled independent of customer request.

10. A non-transitory computer-readable storage medium comprising instructions stored thereon for determining optimized routes for repositioning empty shipping containers that, when executed by at least one processor, are configured to cause a computing system to at least:
generate candidate paths for repositioning empty shipping containers based on container depots, paths between container depots, and movements of full shipping containers between the container depots along the paths;
present the candidate paths to a user;
receive a removal of some of the candidate paths from the user, the removal resulting in remaining paths that are a subset of the candidate paths and not do not include the removed paths; and
generate the optimized routes for repositioning the empty shipping containers between the container depots based on the remaining paths and movements of full shipping containers between the container depots.

11. The non-transitory computer-readable storage medium of claim 10,
wherein the instructions are further configured to cause the computing system to determine optimal quantities of empty shipping containers to reposition via the optimized routes.

12. The non-transitory computer-readable storage medium of claim 10,
wherein the instructions are further configured to cause the computing system to determine optimal quantities and types of empty shipping containers to reposition via the optimized routes.

13. The non-transitory computer-readable storage medium of any one of claims 10 to 12, wherein:
the instructions are further configured to cause the computing system to receive a minimum number of containers for at least one of the container depots; and
the generating the optimized routes includes generating the optimized routes for repositioning the empty shipping containers between the container depots based on:
the remaining paths,
the movements of full shipping containers between the container depots, and
the minimum number of containers for the at least one container depot.

14. The non-transitory computer-readable storage medium of any one of claims 10 to 12, wherein:
the instructions are further configured to cause the computing system to receive a minimum number of containers for at least one of the remaining paths; and
the generating the optimized routes includes generating the optimized routes for repositioning the empty shipping containers between the container depots based on:
the remaining paths,
the movements of full shipping containers between the container depots, and
the minimum number of containers for the at least one preferred path.

15. A method performed by a computing system for determining optimized routes for repositioning empty shipping containers, the method comprising:
generating, by the computing system, candidate paths for repositioning empty shipping containers based on:
container depots,
direct paths between the container depots, and
scheduled paths between the container depots;
presenting the candidate paths to a user;
receiving a selection of preferred paths from the user, the preferred paths being a subset of the candidate paths; and
generating the optimized routes for repositioning the empty shipping containers between the container depots based on the preferred paths and movements of full shipping containers between the container depots.
